# EUROPÄISCHE PATENTSCHRIFT

(11) **EP 1 831 581 B1**
(45) Veröffentlichungstag und Bekanntmachung des Hinweises auf die Patenterteilung: **05.03.2008**
(21) Anmeldenummer: 05813384.4
(22) Anmeldetag: 29.11.2005
(51) Int. Cl.: F16F 9/05

(54) **RADFÜHRENDE LUFTFEDER- UND DÄMPFEREINHEIT**
WHEEL-GUIDING PNEUMATIC SPRING AND DAMPER UNIT
UNITE RESSORT ET AMORTISSEUR PNEUMATIQUE DE GUIDAGE DE ROUE

(30) Priorität: 11.12.2004 DE 102004059765
(43) Veröffentlichungstag der Anmeldung: 12.09.2007
(73) Patentinhaber: Continental Aktiengesellschaft, D-30165 Hannover (DE)
(72) Erfinder: GLEU, Jens-Uwe, 30855 Langenhagen (DE)
(74) Vertreter: Finger, Karsten
(86) Internationale Anmeldenummer: PCT/EP2005/012713
(87) Internationale Veröffentlichungsnummer: WO 2006/061119

(56) Entgegenhaltungen:
- DE-A1- 2 406 835
- DE-B- 1 132 013
- DE-B3- 10 311 263

## Beschreibung

Die Erfindung betrifft eine Luftfeder- und Dämpfereinheit, insbesondere für Fahrwerke von Fahrzeugen, welche zwischen Karosserie und Fahrwerk angeordnet ist und mindestens zwei mit Druckluft gefüllte Arbeitsräume aufweist, bei der die Arbeitsräume jeweils mindesten teilweise durch bewegliche Wände in Form von Roll- oder Faltenbälgen begrenzt werden und die Roll- oder Faltenbälge mindestens teilweise auf den Konturen rotationssymmetrischer Körper abrollen (Abrollkonturen), vorzugsweise auf als Zylinderflächen ausgebildeten Gehäuseteilen, wobei die Arbeitsräume übereinander angeordnet und untereinander über durchströmbare Drosselventile verbunden sind, und bei der sich beim Einfedern in Hauptbelastungsrichtung das Volumen eines Arbeitsraumes verringert und das Volumen des anderen Arbeitsraumes sich vergrößert oder unverändert bleibt.

Die DE 103 11 263 B3 zeigt eine Luftfeder mit Luftdämpfung, wobei zwei Arbeitskammern und drei Rollbälge vorgesehen sind. Der im Durchmesser größte Rollbalg bestimmt hierbei die Federrate der Luftfeder über den Federweg und ist angeordnet zwischen einem oberen und einem unteren topfförmigen Gehäuseteil. Die beiden weiteren und sich in ihrer wirksamen Federkraft kompensierenden Bälge sind zwischen dem unteren topfförmigen Gehäuseteil und einem Abrollrohr angeordnet, welches innerhalb des oberen topfförmigen Gehäuseteil befestigt ist und in den unteren topfförmigen Gehäuseteil hineinragt. Über Drosselbohrungen in den zylindrischen Wänden des Abrollrohres kann Luft zwischen beiden Arbeitsräumen strömen. Die beiden unteren spiegelbildlich angeordneten Bälge erlauben in dieser Ausbildung eine axiale Führung der Luftfeder, wodurch die Reibung während des Federhubes weitgehend reduziert wird. Bei diesem System wird jedoch beim Einfedern das Volumen beider Arbeitskammern verkleinert und beim Ausfedern wieder vergrößert. Durch das Verkleinern beider Volumina beim Einfedern steigt zwar in beiden Arbeitskammern der Druck und damit die Gasdichte an, nachteiligerweise aber nicht der dynamische Differenzdruck an den Drosselventilen. Dies wiederum bewirkt einen auch bei höherem Druck nur geringfügig gesteigerten Energieumsatz, d.h. relativ wenig Dissipation und damit geringere Dämpfungsarbeit.

Die US 5,180,145 offenbart einen insbesondere mit einer elektrorheologischen Flüssigkeit arbeitenden Dämpfer mit einem oberen und einem unteren Arbeitsraum, die jeweils teilweise durch Rollbälge begrenzt sind. Der Dämpfer läßt trotz verringerter Bauhöhe einen relativ großen Hub zu und ist in einer dort offenbarten Ausführungsform auch mit einer einfachen Luftfeder kombinierbar, deren einziger Arbeitsraum nach außen ebenfalls teilweise durch einen Rollbalg begrenzt wird. Die Kombination von mit jeweils unterschiedlichen Medien arbeitenden Dämpfern und Federn erhöht jedoch die Komplexität und damit die Kosten des Bauteils. Zusätzlich birgt das Recycling von insbesondere elektrorheologischen Flüssigkeiten mögliche Probleme im Lifecycle-Management.

Die DE 34 36 664 A1 offenbart eine Membran-Luftfeder, welche ebenfalls Federung und Dämpfung bereitstellt und zwei unterschiedlich große Arbeitskammern aufweist, die jeweils teilweise durch Rollbälge nach außen begrenzt sind. Die Rollbälge stützen sich ab und rollen dabei auf äußeren Zylinderflächen axial beweglicher und als Hohlkolben ausgebildeter Gehäuseteile. Die unterschiedlich großen Arbeitskammern sind durch eine mit Drosselöffnungen versehene Wand getrennt. Durch die Drosselöffnungen kann Luft von einer Arbeitskammer in die andere strömen, wobei die entstehende Dissipation die Dämpfungsarbeit erzeugt. Die Membran-Luftfeder ist jedoch in ihrer Grundkonstruktion, bei der die als Hohlkolben ausgebildeten Gehäuseteile mit einer in einer Trennwand geführten zentralen Stange verbunden sind, mit erheblichen Reibungsverlusten in dieser Führung behaftet. Hierdurch wird u.a. eine Mindestkraft erforderlich, die erreicht werden muß, um eine Federbewegung / Federwirkung überhaupt zu beginnen. Unterhalb einer solchen Mindestkraft werden alle Schwingungen ungedämpft und ungefedert übertragen.

Eine weitere dort gezeigte Ausführung, bei der die starre und in der Trennwand geführte Verbindungsstange durch einen äußeren Rahmen ersetzt wird, ist durch ihre Baugröße in kardanischen Aufhängungen insbesondere von Fahrzeugen kaum einsetzbar.

Die OS DE 24 06 S35 offenbart eine Federungs- und Dämpfungsvorrichtung, bei der zwei Arbeitsräume, nämlich ein Dämpferraum und ein Federungsraum, über Drosselventile miteinander verbunden sind. Beide Arbeitsräume sind mindestens teilweise durch bewegliche Wände in Form von Faltenbälgen oder Rollbälgen begrenzt und können daher unterschiedliche Volumina annehmen. Im Gegensatz zu der in der DE 103 11 263 B3 2004.07.29 offenbarten Luftfeder wird hier beim Einfedern das Volumen des Federungsraumes verkleinert und das Volumen des Dämpferraumes vergrößert, beim Ausfedern jeweils umgekehrt. Einem solchen System ist inhärent, dass sich die Dämpfungswirkung /Dämpfungsarbeit mit steigender Last erhöht, während eine normale hydraulische Dämpfung auf nur eine Laststufe ausgelegt ist und sich bei z.B. Erhöhung der Last gravierend verändert (erniedrigt). Erhöht sich jedoch bei der in der OS DE 24 06 835 offenbarten Federungs- und Dämpfungsvorrichtung die Last, so steigt der Gasdruck im Federungsraum und im Dämpfungsraum und führt aufgrund der damit verbundenen Erhöhung der Gasdichte zur Vergrößerung des dynamischen Differenzdrucks an den Drosselventilen. Dies wiederum bewirkt einen vergrößerten Energieumsatz, d.h. eine erhöhte Dissipation und damit größere Dämpfungsarbeit. Nachteilig ist auch hier eine merkbare Reibung im System aller gezeigten Ausführungsarten, wodurch u.a. eine Mindestkraft zur Aktivierung des Feder-Dämpfer-Systems erforderlich wird.

Die DE 101 15 980 offenbart eine Gasfeder-Dämpfer-Einheit mit einem in einem Zylindergehäuse verschiebbaren und gegenüber letzterem abgedichteten Kolben, der zwei Arbeitsräume unterteilt. Dabei wird der auf der Kolbenvorderseite liegende Federungsraum bzw. Federdämpferraum beim Einfedern verkleinert. Der auf der Kolbenrückseite befindliche und die Kolbenstange beinhaltende Dämpferraum wird beim Einfedern vergrößert und umgekehrt. Der Dämpferraum ist teilweise von einem Rollbalg nach außen begrenzt. Die im Kolben befindlichen Drosselventile sind dabei so gestaltet, dass abhängig von der Durchströmungsrichtung ein unterschiedlicher Strömungswiderstand vorhanden ist und der Ort des Umschlags von laminarer in turbulente Strömung angepasst wird Auch hier ist durch die Führung des Kolbens im Zylinder das Problem der Reibung noch nicht zufriedenstellend gelöst.

Gleiches gilt für die im Hinblick auf die in der DE 199 32 717 A1 offenbart Einrichtung. Auch hier findet man eine Gasfeder-Dämpfer-Einheit mit einem in einem Zylindergehäuse verschiebbaren abgedichteten Kolben, der zwei Arbeitsräume unterteilt. Der auf der Kolbenvorderseite liegende Federungsraum bzw. Federdämpferraum wird beim Einfedern verkleinert, während der auf der Kolbenrückseite befindliche und die Kolbenstange beinhaltende Dämpferraum beim Einfedern vergrößert wird und umgekehrt. Der Dämpferraum ist teilweise von einem Rollbalg nach außen begrenzt. Die im Kolben befindlichen Drosselventile sind dabei als mit Federscheiben belastete Ventile gestaltet, wobei die Federscheiben und Ventilquerschnitte abhängig von der Durchströmungsrichtung ausgebildet sind.

Allen im Stand der Technik bekannten Lösungen haftet jedoch der Nachteil an, dass auf die Luftfedern oder Luftdämpfer einwirkende Querkräfte, d.h. Fahrwerkskräfte normal zur Achse der Luftfedern nicht übertragen werden können, da entweder eine ausreichende axiale Führung fehlt oder aber Schäden an den Bauteilen entstehen können. Luftfedern oder Luftdämpfer herkömmlicher Bauarten sind daher nicht in der Lage, eine Radführung innerhalb eines Fahrwerkes zu übernehmen. Im Wesentlichen aus diesem Grund und natürlich auch wegen ihrer Baugröße kommen bisher Luftdämpfer in McPherson-Federbeinen überhaupt nicht zum Einsatz.

Für die Erfindung bestand daher die Aufgabe, eine Luftfeder- und Dämpfereinheit bereitzustellen, deren Bauraum gering und z. B. auch für ein Personenkraftwagen geeignete ist, die ohne konstruktiven Mehraufwand in den Bauraum von herkömmlichen Federungs- und Dämpfungsvorrichtungen eingebaut werden kann, die keine - insbesondere keine trockene - Reibung aufweist, welche zu akustischen Problemen führen kann oder eine Mindestkraft zur Aktivierung des Feder-Dämpfer-Systems erfordert, die weiterhin mit nur einem Medium arbeitet und durch einfache Maßnahmen auf unterschiedliche Belastungsfälle ausgelegt werden kann, und die insbesondere in der Lage ist, Querkräfte aufzunehmen und damit eine Radführung erlaubt.

Gelöst wird diese Aufgabe durch die Merkmale des Hauptanspruchs. Vorteilhafte Ausbildungen sind in den Unteransprüchen enthalten.

Dabei sind die Arbeitsräume innerhalb eines gemeinsamen topfförmigen rotationssymmetrischen Gehäuses angeordnet und durch einen innerhalb des Gehäuses axial beweglichen und am Kopfende einer Kolbenstange befindlichen rotationssymmetrischen Kolben getrennt, sodass ein Arbeitsraum an der Kolbenvorderseite und mindestens eine anderer Arbeitsraum zur Kolbenrückseite hin angeordnet ist. Der Kolben wird durch Rollbälge innerhalb des Gehäuses abgedichtet und geführt und die Außenfläche des Kolbens und die Innenfläche des Zylinders sind jeweils mindestens teilweise als rotationssymmetrische Abrollkonturen ausgebildet. Die Kolbenstange und der Kolben sind dabei über ein Gelenk miteinander verbunden.

Eine solche Luftfeder- und Dämpfereinheit weist auch bei hohen Belastungen eine geringe Baugröße auf und vermeidet durch das Abtrennen und Dichten des Kolbens und der Kolbenstange jeweils durch Rollbälge innerhalb des zylindrischen Gehäuses jede merkbare Reibung und sorgt für ein sofortiges und komfortables "Anspringen". Zusätzlich erlaubt die Anordnung innerhalb eines einzigen gemeinsamen topfförmigen rotationssymmetrischen Gehäuses eine gegenüber rauhen Umgebungsbedingungen erleichterte Kapselung, z. B. mittels Faltenbälgen zwischen zylindrischem Gehäuse und Kolbenstange oder Anschlußpunkten.

Des Weiteren können mit erffndungsgemäßen Luftfeder- und Dämpfereinheit Querkräfte aus dem Fahrwerk aufgenommen werden. Durch die Führung des Kolbens mit Bälgen und die gelenkige Verbindung zwischen Kolben und Kolbenstange entfällt sogar der aufwendige und bei herkömmlichen Luftfedern mit Hydraulikdämpfern erforderliche sogenannte "Querkraftausgleich". Hierunter versteht Maßnahmen, die dazu führen, dass sich in jedem Ein- und Ausfederpunkt die Wirkungslinie der Federkraft, die Wirkungslinie der Resultierenden aus Radaufstandskraft und Seitenführungskraft des Rades, und die Wirkungslinie der Querlenkerkraft - bzw. der bei mehreren Querlenkern vorhandenen entsprechenden Resultierenden - in einem Punkt schneiden. Dies kann beispielsweise und relativ aufwendig durch entsprechende Ausbildungen von Führungseinrichtungen der Feder geschehen. Ist ein Querkraftausgleich dahingegen nur im Konstruktionszustand vorhanden, d.h. im statischen Ruhezustand ohne Ein- oder Ausfederung, so verursachen schon geringste Änderungen dieses Kräfteplans infolge von Federbewegungen bei herkömmlichen Systemen erhebliche Biegebelastungen und damit hohe und schädliche Reibung im Dämpfer zwischen Kolben und Dämpferrohr sowie starke Geräuschübertragungen.

Eine vorteilhafte Ausbildung besteht darin, dass die Kolbenstange und der Kolben über ein kardanisch wirkendes Drehgelenk miteinander verbunden sind, vorzugsweise über ein Kugelgelenk. Mit einem solchen Gelenk wird eine maximale Toleranz gegenüber Abweichungen im Hinblick auf den Querkraftausgleich erreicht und es entfällt die Notwendigkeit, eine Drehbewegung in anderen Bauteilen aufzufangen, beispielsweise durch eine separates drehbares Kopflager zwischen Karosserie und Federbein.

Eine weitere vorteilhafte Ausbildung besteht darin, dass die Kolbenstange innerhalb des Kolbens gelenkig gelagert ist, wobei der Kolben teilweise als Hohlkörper, vorzugsweise als Hohlzylinder ausgebildet ist und die Kolbenstange in ihrem Endbereich beabstandet umschließt. Hierdurch wird eine weitere Reduzierung der Bauhöhe erreicht, was insbesondere in Kombination mit einer Ausbildung, dass der Kolben in dem zur Kolbenvorderseite gelegenen Bereich einen größeren Außendurchmesser aufweist als in dem zur Kolbenrückseite gelegenen und im Wesentlichen hohlzylindrischen Bereich dazu führt, dass die Volumina der Arbeitsräume in Wechselwirkung mit der Bauhöhe so abgestimmt werden können, dass es erstmalig möglich wird, eine Luftfeder- und Dämpfereinheit mit z. B. einem McPherson-Federbein zu kombinieren. Hierdurch ergeben sich völlig neue Möglichkeiten in der Gestaltung von Radhäusern und Karosserieteilen, ohne auf den Komfort einer Luftdämpfung zu verzichten.

Eine weitere vorteilhafte Ausbildung besteht darin, dass im Bereich des größeren Außendurchmessers ein zwischen Kolben und Gehäuse abdichtender, zur Kolbenvorderseite und damit zum an der Kolbenvorderseite angeordneten Arbeitsraum geöffneter erster Rollbalg, sowie ein zwischen Kolben und Gehäuse abdichtender, zur Kolbenrückseite und damit zum an der Kolbenrückseite angeordneten Arbeitsraum geöffneter zweiter Rollbalg angeordnet sind, und dass im Bereich des kleineren Außendurchmessers ein zwischen Kolben und Gehäuse abdichtender dritter Rollbalg angeordnet ist, der zum an der Kolbenrückseite angeordneten Arbeitsraum geöffnet und spiegelbildlich zum zweiten Rollbalg angeordnet ist

Ein Ausbildung mit drei auf solche Art angeordneten Bälgen erlaubt eine präzise und sichere Führung des Kolbens innerhalb des topfförmigen Gehäuses, das z.B. mit der Karosserie verbunden ist. Insbesondere bei der Aufnahme von auch auf die Luftfeder- und Dämpfereinheit einwirkenden Querkräften erweist sich eine solche Ausführung als besonders robust.

Dadurch, dass der die Kolbenvorderseite abdichtende erste Rollbalg zur Kolbenvorderseite geöffnet ist, und durch die erfindungsgemäße Ausbildung des zweiten und des dritten Rollbalges, benutzen erster und zweiter Rollbalg mindestens teilweise dieselbe rotationssymmetrische Abrollkontur auf der Kolbenaußenfläche, was die Baugröße weiter reduziert.

Eine weitere vorteilhafte Ausbildung besteht darin, dass der erste und der zweite Rollbalg im Wesentlichen gleiche wirksame Durchmesser aufweisen, insbesondere dann, wenn der jeweils wirksame Durchmesser des ersten und zweiten Rollbalges größer ist als der wirksame Durchmesser des dritten Rollbalges.

Betrachtet man die durch eine solche Anordnung der Rollbälge in der erfindungsgemäßen Luftfeder- und Dämpfereinheit entstehenden übereinander liegende Arbeitsräume und die durch die Rollbalg-Geometrie bestimmten "wirksamen Durchmesser", so werden im stationären Zustand, also bei statischer Belastung der Luftfeder- und Dämpfereinheit und Druckausgleich zwischen den beiden Arbeitskammern, der erste und der zweite sich am Kolben befindliche Rollbalg sich in ihrer Kraftrichtung und -größe im Wesentlichen kompensieren. Damit wird im Zusammenwirken der Bauteile die wirksame Tragfeder im Wesentlichen mit Hilfe des dritten Rollbalges gebildet und auch in ihrer Tragkraft durch den wirksamen Durchmesser des dritten Rollbalges bestimmt.

In guter Näherung ist also der auf der Kolbenrückseite gelegene und die Kolbenstange umgebende Arbeitsraum, der u.a. durch den zweiten und den dritten Rollbalg begrenzt wird, als "Federungsraum" anzusehen. Demgegenüber kann der auf der Kolbenvorderseite gelegene und u.a. durch den ersten Rollbalg begrenzte Arbeitsraum als "Dämpfungsraum" bezeichnet werden. Eine solche vereinfachende Unterteilung der Arbeitsräume in "Federungsraum" und "Dämpfungsraum" beschreibt jedoch nur die Hauptfunktionen bzw. die wesentlichen Eigenschaften. Selbstverständlich weisen beide Arbeitsräume im dynamischen Zustand sowohl Federungs- als auch Dämpfungseigenschaften auf.

Bei der erfindungsgemäßen Luftfeder- und Dämpfereinheit verringert sich also beim Einfedern in Hauptbelastungsrichtung, nämlich in axialer Richtung der Luftfeder- und Dämpfereinheit, im Gegensatz zu den bisher bekannten Luftdämpfungssystemen das Volumen des Dämpfungsraumes, während - je nach konstruktiver Auslegung - das Volumen des Federungsraumes sich vergrößert oder unverändert bleibt.

Durch die so ausgebildeten Volumina und die für die Rollbälge wirksamen Durchmesser erzeugt man eine relativ zur Baugröße große Dämpfungsarbeit, bzw. erhält die Größe der gewünschten Dämpfungsarbeit bei verringertem Bauraum.

Eine weitere vorteilhafte Ausbildung besteht darin, dass die Außenfläche des rotationssymmetrischen Kolbens mindestens teilweise und vorzugsweise im Bereich des größeren Außendurchmessers als Kegelmantel ausgebildet ist und der erste und der zweite Rollbalg unterschiedliche wirksame Durchmesser aufweisen. Die vorteilhafte Ausbildung wird dann besonders unterstützt, wenn die Durchmesser des ersten und zweiten Rollbalges jeweils größer sind als der wirksame Durchmesser des dritten Rollbalges. Durch die so entstehende und durch die unterschiedlichen wirksamen Durchmesser des ersten und zweiten Rollbalges gebildete Differenzfläche (Kreisringfläche) läßt sich eine auf den Kolben wirkende und in Kraftrichtung und -größe einstellbare Differenzkraft erzeugen, mit der es möglich ist, besonderen Belastungs- oder Geometrieanforderungen des Gesamtsystems zu entsprechen.

Dies läßt sich in vorteilhafter Weise dadurch realisieren, dass der wirksame Durchmesser des ersten Rollbalges kleiner ist als der wirksame Durchmesser des zweiten Rollbalges. Die damit entstehende Differenzkraft wirkt damit zusätzlich in Belastungrichtung, also entgegen der durch den dritten Rollbalg erzeugten Federungskraft, "zieht" den Kolben damit tiefer in das topfförmige zylindrische Gehäuse, und versucht, die Luftfeder- und Dämpfereinheit zu verkürzen. Dem läßt sich dann durch einen höheren Betriebsdruck oder durch eine Vergrößerung des dritten Rollbalges, also durch eine Vergrößerung des wirksamen Durchmessers des dritten Rollbalges entgegenwirken. Letzteres führt zu einem größeren Radius in der ständig bewegten Rollbalgfalte und damit zu einer erheblichen Verlängerung der Lebensdauer. Diese Ausbildung der Luftfeder- und Dämpfereinheit erlaubt also eine Vielzahl von konstruktiven Anpassungen und Freiheiten ohne die Baugröße zu verändern und unter größtmöglicher Nutzung des "Gleichteile-Prinzips", d.h. unter Nutzung möglichst vieler gleiche Bauteile für eine große Menge an Konstruktionsvarianten.

Eine weitere vorteilhafte Ausbildung besteht darin, dass das topfförmige Gehäuse vorzugsweise im oberen Bereich karosseriefest und die Kolbenstange im unteren Bereich an einer Radaufhängung befestigbar sind. Hierdurch liegt insbesondere bei der Verwendung in Fahrwerken von Personenkraftwagen die Luftfeder- und Dämpfereinheit geschützt im Radhaus und paßt in der Vielzahl der Einbaufälle hervorragend in den üblicherweise dafür vorgesehenen Bauraum (Package).

Eine weitere vorteilhafte Ausbildung besteht darin, dass die durchströmbaren Drosselventile als schalt- oder steuerbare Ventile ausgebildet und innerhalb des die Arbeitsräume trennenden Kolbens angeordnet sind. Insbesondere bei der Anwendung in Fahrwerken von Kraftwagen ist es wünschenswert, die Dämpfungsarbeit zu steuern bzw. zu regeln und somit in die gesamte Fahrzeugsteuerung mit einzubinden. In sicherheitskritischen Situationen, wie z. B bei einer Vollbremsung, kann dann eine regelbare Dämpfung der Vorder- und Hinterachse ein Antiblockiersystem (ABS) oder eine elektronische Stabilitätskontrolle (ESP) unterstützen.

Anhand eines Ausführungsbeispieles soll die Erfindung näher erläutert werden.

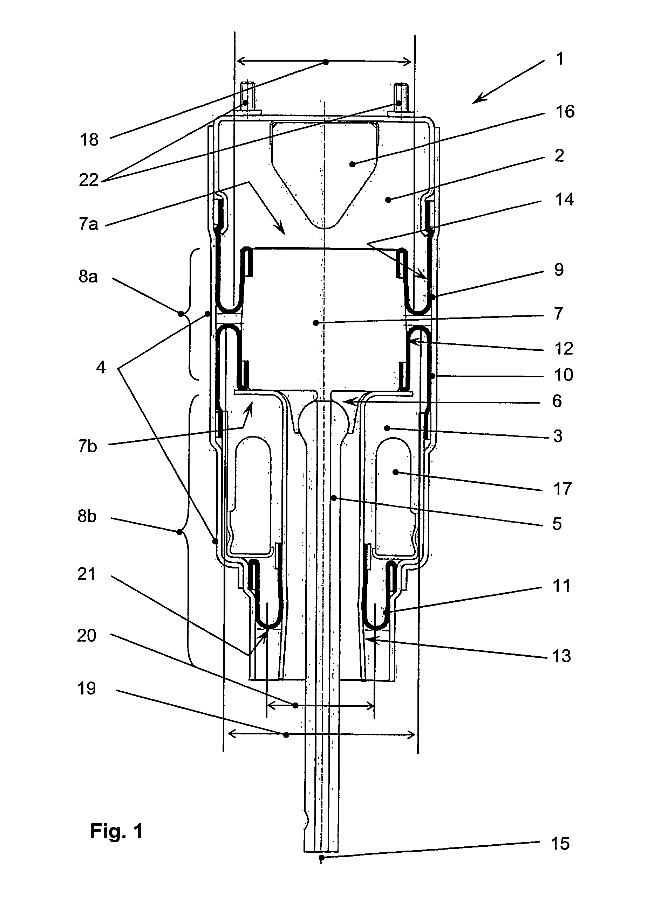

Die Fig. 1 zeigt eine erfindungsgemäße Luftfeder- und Dämpfereinheit 1 für ein Fahrwerk mit eines luftgefederten Personenkraftwagens mit radführenden Federbeinen. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrisch ausgebildeten Gehäuse 4 angeordnet und durch einen am Kopfende einer Kolbenstange 5 in einem Kugelgelenk 6 gelagerten und hier ebenfalls zylindrisch ausgebildeten Kolben 7 getrennt. Der Kolben 7 ist innerhalb des Gehäuses 4 axial beweglich. Innerhalb des Kolbens 7 sind hier nicht näher dargestellte steuerbare Drosselventile angeordnet, über die beiden Arbeitsräume 2 und 3 verbunden sind. Der Kolbenvorderseite 7a des Kolbens 7 weist eine im Wesentlichen kreisförmige Fläche auf.

Der Kolben ist dabei in seinem unteren Bereich als Hohlkörper, hier als Hohlzylinder ausgebildet ist und umschließt mit einem nötigen Abstand die Kolbenstange 5 in ihrem Endbereich. Der Kolben 7 besteht dabei aus einem zur Kolbenvorderseite gelegenen Bereich 8a mit einem größeren Außendurchmesser und aus einem zur Kolbenrückseite gelegenen Bereich 8b mit einem kleineren Außendurchmesser. Der Bereich 8b entspricht in diesem Fall auch etwa der Länge hohlzylindrischen Ausbildung des Kolbens. Die Kolbenrückseite 7b wird durch den Durchmessersprung im Kolben 7 erzeugt und weist eine im Wesentlichen kreisringförmige Fläche auf.

Der Kolben 7 wird durch Rollbälge 9, 10 und 11 innerhalb des Gehäuses abgedichtet und geführt. Die Außenflächen 12 und 13 des Kolbens sowie die Innenfläche 14 des Gehäuses sind jeweils über einen für das Abrollen der Rollbälge erforderlichen Bereich als rotationssymmetrische Abrollkonturen ausgebildet.

Im Bereich des größeren Außendurchmessers 8a befindet sich also ein zur Kolbenvorderseite 7a und damit zum oberen Arbeitsraum 2 geöffneter erster Rollbalg 9 sowie ein zur Kolbenrückseite 7b und damit zum unteren Arbeitsraum geöffneter zweiter Rollbalg 10. Im Bereich des kleineren Außendurchmessers 8b befindet sich damit ein dritter Rollbalg 11, der zum unteren Arbeitsraum geöffneter und spiegelbildlich zum zweiten Rollbalg 10 angeordnet ist.

Ein zwischen dem Ende des Gehäuses und dem unteren Anschlußpunkt 15 zum Fahrwerk befindlicher Faltenbalg zum Schutz gegen Umgebungsbedingungen ist hier nicht näher dargestellt.

Die Luftfeder- und Dämpfereinheit weist weiterhin federnd ausgebildete Anschläge 16 und 17 auf, die bei entsprechender Belastung in der Druck- oder in der Zug-Endlage den Federweg begrenzen.

Im Bereich 8a ist die rotationssymmetrische Kontur des zylindrischen Kolbens 7 ist als ein sich zur Kolbenvorderseite 7a verjüngender Kegelmantel ausgebildet. Dadurch weisen der erste Rollbalg 9 und der zweite Rollbalg 10 unterschiedliche wirksame Durchmesser 18 und 19 auf, die jeweils größer sind als der wirksame Durchmesser 20 des dritten Rollbalges 11.

Die jeweils wirksamen Durchmesser werden dabei gebildet und beeinflußt durch das Zusammenspiel der gegenüberliegenden rotationssymmetrischen Konturen des Kolbens 7 und des Gehäuses 4.

Der wirksame Durchmesser des ersten Rollbalges 18 ist damit in dieser Ausführung kleiner als der wirksame Durchmesser 19 des zweiten Rollbalges. Durch die unterschiedlichen wirksamen Durchmesser 18 und 19 entsteht eine Differenzfläche (Kreisringfläche), die eine auf den Kolben wirkende und in diesem Fall nach oben gerichtete Differenzkraft erzeugt.

Die Differenzkraft "zieht" den Kolben damit tiefer in das topfförmige Gehäuse. Der dritte Rollbalg 11 besitzt jedoch einen so groß ausgelegten wirksamen Durchmessers 20, dass die Differenzkraft bei gegebenem Betriebsdruck zusätzlich zur statischen oder dynamischen Belastung aufgefangen werden kann. Damit besitzt der dritte Rollbalg 11 aber auch einen großen Radius in der ständig bewegten Rollfalte 21 und damit eine sehr hohe Lastspielfestigkeit.

Durch die gelenkige Verbindung zwischen Kolben 7 und Kolbenstange 5 kann die Luftfeder- und Dämpfereinheit direkt und ohne weitere drehfähige Verbindungen oder zusätzliche Lager über einfache Verschraubungen 22 mit dem Fahrzeug verbunden werden. Ein präziser Querkraftausgleich ist hierbei nicht mehr erforderlich.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Gehäuse
- 5: Kolbenstange
- 6: Kugelgelenk
- 7: Kolben
- 7a: Kolbenvorderseite
- 7b: Kolbenrückseite
- 8a: Kolbenbereich mit großem Außendurchmesser
- 8b: Kolbenbereich mit kleinem Außendurchmesser
- 9 - 11: Rollbalg
- 12 - 14: Fläche mit Abrollkontur
- 15: Anschlußpunkt
- 16, 17: Federnder Anschlag
- 18 - 20: Wirksamer Durchmesser
- 21: Rollfalte
- 22: Karosserieanschluß

## Patentansprüche

1. Luftfeder- und Dämpfereinheit, insbesondere für Fahrwerke von Fahrzeugen, welche zwischen Karosserie und Fahrwerk angeordnet ist und mindestens zwei mit Druckluft gefüllte Arbeitsräume aufweist, bei der die Arbeitsräume jeweils mindesten teilweise durch bewegliche Wände in Form von Roll- oder Faltenbälgen begrenzt werden und die Roll- oder Faltenbälge mindestens teilweise auf den Konturen rotationssymmetrischer Körper abrollen, wobei die Arbeitsräume übereinander angeordnet und untereinander über durchströmbare Drosselventile verbunden sind, und bei der sich beim Einfedern in Hauptbelastungsrichtung das Volumen eines Arbeitsraumes verringert und das Volumen des anderen Arbeitsraumes sich vergrößert oder unverändert bleibt, **dadurch gekennzeichnet, dass** die Arbeitsräume (2,3) innerhalb eines gemeinsamen topfförmigen rotationssymmetrischen Gehäuses (4) angeordnet und durch einen innerhalb des Gehäuses axial beweglichen und am Kopfende einer Kolbenstange (5) befindlichen rotationssymmetrischen Kolben (7) getrennt sind, sodass ein Arbeitsraum (2) an der Kolbenvorderseite (7a) und mindestens eine anderer Arbeitsraum (3) zur Kolbenrückseite (7b) hin angeordnet ist, dass der Kolben durch Rollbälge (9,10, 11) innerhalb des Gehäuses abgedichtet und geführt wird und die Außenfläche (12, 13) des Kolbens (7) und die Innenfläche (14) des Gehäuses (4) jeweils mindestens teilweise als rotationssymmetrische Abrollkonturen ausgebildet sind, und dass die Kolbenstange (5) und der Kolben (7) über ein Gelenk miteinander verbunden sind.

2. Luftfeder- und Dämpfereinheit nach Anspruch 1, **dadurch gekennzeichnet, dass** die Kolbenstange (5) und der Kolben (7) über ein kardanisch wirkendes Drehgelenk miteinander verbunden sind, vorzugsweise über ein Kugelgelenk (6).

3. Luftfeder- und Dämpfereinheit nach Anspruch 2, **dadurch gekennzeichnet, dass** die Kolbenstange (5) innerhalb des Kolbens (7) gelenkig gelagert ist, wobei der Kolben teilweise als Hohlkörper, vorzugsweise als Hohlzylinder ausgebildet ist und die Kolbenstange (5) in ihrem Endbereich beabstandet umschließt.

4. Luftfeder- und Dämpfereinheit nach Anspruch 3, **dadurch gekennzeichnet, dass** der Kolben (7) in dem zur Kolbenvorderseite (7a) gelegenen Bereich einen größeren Außendurchmesser aufweist als in dem zur Kolbenrückseite (7b) gelegenen Bereich mit der Hohlkörper-Ausbildung.

5. Luftfeder- und Dämpfereinheit nach Anspruch 4, **dadurch gekennzeichnet, dass** im Bereich (8a) des größeren Außendurchmessers ein zwischen Kolben (7) und Gehäuse (4) abdichtender, zur Kolbenvorderseite (7a) und damit zum an der Kolbenvorderseite angeordneten Arbeitsraum (2) geöffneter erster Rollbalg (9), sowie ein zwischen Kolben und Gehäuse abdichtender, zur Kolbenrückseite (7b) und damit zum an der Kolbenrückseite angeordneten Arbeitsraum (3) geöffneter zweiter Rollbalg (10) angeordnet ist, und dass im Bereich (8b) des kleineren Außendurchmessers ein zwischen Kolben und Gehäuse abdichtender dritter Rollbalg (11) angeordnet ist, der zum an der Kolbenrückseite (7b) angeordneten Arbeitsraum (3) geöffnet und spiegelbildlich zum zweiten Rollbalg (8) angeordnet ist.

6. Luftfeder- und Dämpfereinheit nach Anspruch 1 bis 5, **dadurch gekennzeichnet, dass** der erste und der zweite Rollbalg (9, 10) im Wesentlichen gleiche wirksame Durchmesser (18, 19) aufweisen.

7. Luftfeder- und Dämpfereinheit nach Anspruch 1 bis 5, **dadurch gekennzeichnet, dass** die Außenfläche des rotationssymmetrischen Kolbens mindestens teilweise und vorzugsweise im Bereich (8a) des größeren Außendurchmessers als Kegelmantel ausgebildet ist und der erste und der zweite Rollbalg (9, 10) unterschiedliche wirksame Durchmesser (18, 19) aufweisen.

8. Luftfeder- und Dämpfereinheit nach Anspruch 6 oder 7, **dadurch gekennzeichnet, dass** der jeweils wirksamer Durchmesser des ersten und zweiten Rollbalges größer ist als der wirksame Durchmesser (20) des dritten Rollbalges (11).

9. Luftfeder- und Dämpfereinheit nach Anspruch 7 oder 8, **dadurch gekennzeichnet, dass** der wirksame Durchmesser (18) des ersten Rollbalges (9) kleiner ist als der wirksame Durchmesser (19) des zweiten Rollbalges (10).

10. Luftfeder- und Dämpfereinheit nach Anspruch 1 bis 9, **dadurch gekennzeichnet, dass** das topfförmige Gehäuse (4) vorzugsweise im oberen Bereich karosseriefest und die Kolbenstange (5) im unteren Bereich an einer Radaufhängung befestigbar sind.

11. Luftfeder- und Dämpfereinheit nach Anspruch 1 bis 10, **dadurch gekennzeichnet, dass** die durchströmbaren Drosselventile als schalt- oder steuerbare Ventile ausgebildet und innerhalb des die Arbeitsräume trennenden Kolbens (7) angeordnet sind.

## Claims

1. Pneumatic spring and damper unit, in particular for chassis of vehicles, which is arranged between the bodywork and chassis and has at least two working spaces filled with compressed air, in which the working spaces are each bounded at least partially by movable walls in the form of rolling bellows or corrugated bellows, and the rolling bellows or corrugated bellows roll at least partially on the contours of rotationally symmetrical elements, the working spaces being arranged one on top of the other and being connected to one another by means of throttle valves through which there can be a flow, and in which in the case of spring compression in the main load direction the volume of one working space is reduced and the volume of the other working space is increased or remains unchanged, **characterized in that** the working spaces (2, 3) are arranged within a common, pot-shaped, rotationally symmetrical housing (4) and are separated by a rotationally symmetrical piston (7) which is axially movable within the housing and is located at the head end of a piston rod (5), with the result that a working space (2) is arranged at the front side (7a) of the piston and at least one other working space (3) is arranged towards the rear side (7b) of the piston, **in that** the piston is sealed and guided by rolling bellows (9, 10, 11) within the housing, and the external surface (12, 13) of the piston (7) and the internal surface (14) of the housing (4) are each formed at least partially as rotationally symmetrical rolling contours, and **in that** the piston rod (5) and the piston (7) are connected to one another by means of a joint.

2. Pneumatic spring and damper unit according to Claim 1, **characterized in that** the piston rod (5) and the piston (7) are connected to one another by means of a cardanically acting rotary joint, preferably by means of a ball and socket joint (6).

3. Pneumatic spring and damper unit according to Claim 2, **characterized in that** the piston rod (5) is mounted in an articulated fashion within the piston (7), the piston being partially embodied as a hollow element, preferably as a hollow cylinder, and enclosing the piston rod (5) in its end region at a distance.

4. Pneumatic spring and damper unit according to Claim 3, **characterized in that** the piston (7) has a larger external diameter in the region located toward the front side (7a) of the piston than in the region with the hollow element formation which is located toward the rear side (7b) of the piston.

5. Pneumatic spring and damper unit according to Claim 4, **characterized in that** a first rolling bellows (9) which forms a seal between the piston (7) and housing (4) and is opened to the front side (7a) of the piston and thus to the working space (2) arranged on the front side of the piston, and a second rolling bellows (10) which forms a seal between the piston and housing and is opened to the rear side (7b) of the piston and thus to the working space (3) arranged at the rear side of the piston, are arranged in the region (8a) of the larger external diameter, and **in that** a third rolling bellows (11) which forms a seal between the piston and the housing is arranged in the region (8b) of the smaller external diameter and is opened to the working space (3) arranged at the rear side (7b) of the piston and is arranged in a mirror-inverted fashion with respect to the second rolling bellows (8).

6. Pneumatic spring and damper unit according to Claims 1 to 5, **characterized in that** the first and second rolling bellows (9, 10) have essentially the same effective diameters (18, 19).

7. Pneumatic spring and damper unit according to Claims 1 to 5, **characterized in that** the external surface of the rotationally symmetrical piston is formed at least partially and preferably as a cone envelope in the region (8a) of the larger external diameter, and the first and second rolling bellows (9, 10) have different effective diameters (18, 19).

8. Pneumatic spring and damper unit according to Claim 6 or 7, **characterized in that** the respective effective diameter of the first and second rolling bellows is larger than the effective diameter (20) of the third rolling bellows (11).

9. Pneumatic spring and damper unit according to Claim 7 or 8, **characterized in that** the effective diameter (18) of the first rolling bellows (9) is smaller than the effective diameter (19) of the second rolling bellows (10).

10. Pneumatic spring and damper unit according to Claims 1 to 9, **characterized in that** the pot-shaped housing (4) is preferably fixed to the vehicle body in the upper region, and the piston rod (5) can be attached to a wheel suspension in the lower region.

11. Pneumatic spring and damper unit according to Claims 1 to 10, **characterized in that** the throttle valves through which there can be a flow are embodied as switchable or controllable valves and are arranged within the piston (7) which separates the working spaces.

## Revendications

1. Unité de ressort et amortisseur pneumatique, en particulier pour train roulant de véhicules, qui est disposée entre la carrosserie et le train roulant et qui comprend au moins deux chambres de travail remplies d'air comprimé, dans laquelle les chambres de travail sont respectivement limitées au moins en partie par des parois mobiles en forme de soufflets roulants ou pliants et les soufflets roulants ou pliants roulent au moins en partie sur les contours de corps à symétrie de rotation, dans laquelle les chambres de travail sont disposées l'une au-dessus de l'autre et sont reliées l'une à l'autre par des soupapes d'étranglement pouvant être traversées, et dans laquelle le volume d'une chambre de travail peut être réduit et le volume de l'autre chambre de travail augmente ou reste inchangé lors de l'enfoncement dans la direction de charge principale, **caractérisée en ce que** les chambres de travail (2, 3) sont disposées à l'intérieur d'un boîtier commun (4), à symétrie de rotation et en forme de pot, et sont séparées au moyen d'un piston (7) à symétrie de rotation, se trouvant à l'extrémité de tête d'une tige de piston (5) et mobile axialement à l'intérieur du boîtier, de telle manière qu'une chambre de travail (2) soit située sur le côté avant du piston (7a) et qu'au moins une autre chambre de travail (3) soit disposée vers le côté arrière du piston (7b), **en ce que** le piston est guidé et rendu étanche à l'intérieur du boîtier au moyen de soufflets roulants (9, 10, 11) et la face extérieure (12, 13) du piston (7) et la face intérieure (14) du boîtier (4) sont réalisées respectivement au moins en partie par des contours de roulement à symétrie de rotation, et **en ce que** la tige de piston (5) et le piston (7) sont reliés l'un à l'autre au moyen d'une articulation.

2. Unité de ressort et amortisseur pneumatique selon la revendication 1, **caractérisée en ce que** la tige de piston (5) et le piston (7) sont reliés l'un à l'autre au moyen d'une articulation rotative agissant à la manière d'un cardan, de préférence au moyen d'une rotule (6).

3. Unité de ressort et amortisseur pneumatique selon la revendication 2, **caractérisée en ce que** la tige de piston (5) est articulée à l'intérieur du piston (7), dans laquelle le piston est en partie un corps creux, de préférence un cylindre creux, et entoure à distance la tige de piston (5) dans sa région d'extrémité.

4. Unité de ressort et amortisseur pneumatique selon la revendication 3, **caractérisée en ce que** le piston (7) présente, dans la région située vers le côté avant du piston (7a), un plus grand diamètre extérieur que dans la région en forme de corps creux située vers le côté arrière du piston (7b).

5. Unité de ressort et amortisseur pneumatique selon la revendication 4, **caractérisée en ce qu'**il se trouve, dans la région (8a) de plus grand diamètre extérieur, un premier soufflet roulant (9) étanche entre le piston (7) et le boîtier (4) et ouvert vers le côté avant du piston (7a) et dès lors vers la chambre de travail (2) disposée sur le côté avant du piston ainsi qu'un deuxième soufflet roulant (10), étanche entre le piston et le boîtier, ouvert vers le côté arrière du piston (7b) et dès lors vers la chambre de travail (3) disposée sur le côté arrière du piston, et **en ce qu'**il se trouve, dans la région (8b) de plus petit diamètre extérieur, un troisième soufflet roulant (11) étanche entre le piston et le boîtier, qui est ouvert vers la chambre de travail (3) disposée sur le côté arrière du piston (7b) et qui est symétrique par rapport au deuxième soufflet roulant (8).

6. Unité de ressort et amortisseur pneumatique selon l'une quelconque des revendications 1 à 5, **caractérisée en ce que** le premier et le deuxième soufflets roulants (9, 10) présentent essentiellement le même diamètre utile (18, 19).

7. Unité de ressort et amortisseur pneumatique selon l'une quelconque des revendications 1 à 5, **caractérisée en ce que** la face extérieure du piston à symétrie de rotation est formée au moins en partie et de préférence dans la région (8a) de plus grand diamètre extérieur par une surface latérale conique et **en ce que** le premier et le deuxième soufflets roulants (9, 10) présentent des diamètres utiles différents (18, 19).

8. Unité de ressort et amortisseur pneumatique selon la revendication 6 ou 7, **caractérisée en ce que** le diamètre utile respectif du premier et du deuxième soufflets roulants est plus grand que le diamètre utile (20) du troisième soufflet roulant (11).

9. Unité de ressort et amortisseur pneumatique selon la revendication 7 ou 8, **caractérisée en ce que** le diamètre utile (18) du premier soufflet roulant (9) est plus petit que le diamètre utile (19) du deuxième soufflet roulant (10).

10. Unité de ressort et amortisseur pneumatique selon l'une quelconque des revendications 1 à 9, **caractérisée en ce que** le boîtier en forme de pot (4) est de préférence solidaire de la carrosserie dans sa région supérieure et la tige de piston (5) peut être fixée à une suspension de roue dans sa région inférieure.

11. Unité de ressort et amortisseur pneumatique selon l'une quelconque des revendications 1 à 10, **caractérisée en ce que** les soupapes d'étranglement pouvant être traversées sont des soupapes pouvant être commutées ou commandées et sont disposées à l'intérieur du piston (7) séparant les chambres de travail.
